# EUROPÄISCHE PATENTSCHRIFT

(11) **EP 2 468 810 B1**
(45) Veröffentlichungstag und Bekanntmachung des Hinweises auf die Patenterteilung: **30.04.2014**
(21) Anmeldenummer: 11194962.4
(22) Anmeldetag: 21.12.2011
(51) Int. Cl.: C08K 3/00

(54) **Mit gemahlenem Glas gefüllte flammwidrige Polyamidzusammensetzungen**
Flame-retardant polyamide compounds filled with ground glass
Compositions de polyamide non inflammables remplies de verre moulu

(30) Priorität: 23.12.2010 EP 10196724
(43) Veröffentlichungstag der Anmeldung: 27.06.2012
(73) Patentinhaber: LANXESS Deutschland GmbH, 50569 Köln (DE)
(72) Erfinder: Endtner, Jochen, 50679 Köln (DE); Schäfer, Marcus, Pittsburgh, PA Pennsylvania 15275-1112 (US); Bienmüller, Matthias, 47803 Krefeld (DE); Bredemann, Thorsten, 50226 Frechen (DE); Van Mullekom, Robert Hubertus, 9150 Kruibeke (BE)

(56) Entgegenhaltungen:
- EP-A1- 1 452 567
- EP-A2- 0 174 826
- WO-A1-01/81470
- WO-A1-03/087226
- WO-A1-2006/135840
- FR-A1- 2 736 919
- US-A1- 2005 131 105

## Beschreibung

Die vorliegende Erfindung betrifft flammwidrige Zusammensetzungen auf Basis eines thermoplastischen Polyamids enthaltend nicht-faserförmiges und nicht-geschäumtes gemahlenes Glas mit spezieller Teilchengrößenverteilung, Geometrie und gegebenenfalls Schlichte sowie die Herstellung und die Verwendung der erfindungsgemäßen Zusammensetzungen zur Herstellung von Erzeugnissen, bevorzugt Fasern, Folien und Formkörpern jeglicher Art.

Zur Modifizierung des Aufbereitungs-, Verarbeitungs- und Einsatzverhaltens sind Kunststoffe größtenteils mit Hilfsstoffen sowie mit Füll- und Verstärkungsstoffen versehen. Letztere verbessern Eigenschaften wie Steifigkeit, Festigkeit, Wärmestandfestigkeit, Maßhaltigkeit und verringern die thermische Ausdehnung.

Von besonderer Bedeutung für Zusammensetzungen in der Technik sind Füll- und Verstärkungsstoffe aus Mineralien oder Glas, insbesondere Borsilikatglas oder Silikatglas, das in Form von Glasfasern, hohlen oder gefüllten Glaskugeln, Glasflocken oder auch in Form von Bläh- bzw. Schaumglas eingesetzt wird.

Aus DE 103 29 583 A1 und DE 103 34 875 A1 sind Werkstoffe für Formteile bekannt, die u.a. als Thermoplast Polyamid und als Füllstoff Glasmehl enthalten.

DE 10 2004 005 642 A1, DE 10 2004 017 350 A1 und DE 10 2004 038 162 A1 befassen sich alle mit Nahrungsmittelhüllen aus thermoplastischen Bestandteilen u.a. auf Basis von (Co)-Polyamid(en) mit u.a. Glasmehl als anorganische partikuläre Substanz die insbesondere in der Außenschicht der Hülle vorteilhaft zugegeben werden kann, wobei die mittlere Korngröße der anorganischen Partikel d50 größer als 10 µm, bevorzugt im Bereich von 15 bis 100 µm, besonders bevorzugt im Bereich von 20 bis 75 µm ist.

Des weiteren offenbart DE 10 2009 022 893 A1 Pulverformulierungen mit Adsorbens-Partikeln auf Basis von Polyestern oder Polyamiden denen ebenfalls als Füllstoff Glasmehl zugesetzt werden kann.

WO 2006/135840 A1 offenbart thermisch leitfähige Komponenten auf Basis teilaromatischer Polyamide, bei denen zur Verbesserung der Dimensionsstabilität und des Verzugs auch isotrope Füllstoffe wie Talk oder Glasflocken zugegeben werden können.

Ein allgemein bekannter Nachteil bei Verwendung von Füll- und Verstärkungsstoffen in brennbaren Thermoplasten wie z.B. Polyamiden liegt jedoch in der negativen Beeinträchtigung des Brand-, insbesondere des Selbstverlöschungsverhaltens, so dass zum Erreichen einer bestimmten Brandklassifizierung nach UL94 oder im Glühdrahttest nach IEC60695-2-12 (GWFI) in der Regel ein erhöhter Aufwand beim Einsatz von Flammschutzmitteln erforderlich ist.

So werden in WO 03/087226 A1 und US 2005/131105 Zusammensetzungen unter anderem auf Basis von Polyetherimiden beschrieben, denen zur Optimierung von Mechanik und Dimensionsstabilität Mischungen aus faserförmigen Verstärkungsstoffen und nichtfaserförmigen anorganischen Füllstoffen wie z.B. Glasmehl und/oder Glasflocken mit einem Durchmesser kleiner 1000µm und einem Aspektverhältnis größer als 5 zugesetzt werden ohne dabei jedoch Vorteile in der Flammwidrigkeit zu erhalten.

In EP 1 452 567 A1 werden flammgeschützte Harzzusammensetzungen mit einem Flammschutzpaket und anorganischen Füllstoffen auf Basis von Glasfasern und/oder Glasflocken beschrieben. Eine hinreichende Flammschutzwirkung (e.g. UL94 V0) ist hier jedoch nur mit einem aufwändigen Flammschutzpaket, das neben stickstoffhaltigen cyclischen Verbindungen auch PPO und/oder PPS und Phosphorigsäureester erfordert sowie einem anorganischen Füllstoff, der zur Verbesserung des Antitropfverhaltens mit einer speziellen Novolak-Epoxy Schlichte versehen sein muss, möglich.

WO 01/81470 A1 betrifft flammgeschützte Polyester-Zusammensetzungen, worin unter anderem Glas "microspheres" eingesetzt werden. EP 0 174 826 A2 beschreibt nicht-entflammbare Polybutylenterephthalat-Zusammensetzungen mit Glasfasern als Verstärkungsmaterial. FR 2736919 A1 offenbart u.a. flammfeste Polyester mit Glasfasern,

Aufgabe der vorliegenden Erfindung war es daher, einen Füll- und Verstärkungsstoff für thermoplastische Polyamide zur Verfügung zu stellen, bei dem das Selbstverlöschungsverhalten bei vergleichbarer Flammschutzausrüstung weniger negativ beeinträchtigt wird, als bei üblichen glas- oder mineralbasierten Füll- und Verstärkungsstoffen.

Es wurde nun überraschend gefunden, dass Zusammensetzungen auf Basis von Polyamiden beim Einsatz von nicht-faserförmigem und nicht-geschäumtem, gemahlenem Glas in der unten näher beschriebenen Form trotz vergleichbarer Flammschutzausrüstung in ihrem Brandverhalten weniger negativ beeinträchtigt werden, als es bei üblichen glas- oder mineralbasierten Füll- und Verstärkungsstoffen der Fall wäre, bzw. dass sich mit dem unten näher beschriebenen Glas ein vergleichbares Brandverhalten bereits mit einer weniger starken bzw. weniger stark konzentrierten Flammschutzausrüstung realisieren lässt, als es bei üblichen glas- oder mineralbasierten Füll- und Verstärkungsstoffen der Fall wäre.

Gegenstand der Erfindung sind somit Zusammensetzungen, enthaltend
A) 5 bis 95 Gew.-%, bevorzugt 20 bis 90 Gew.-%, besonders bevorzugt 30 bis 80 Gew.-% eines thermoplastischen Polyamids,
B) 0,01 bis 40 Gew.-% Melamincyanurat
C) 5 bis 80 Gew.-%, bevorzugt 10 bis 60 Gew.-%, besonders bevorzugt 15 bis 40 Gew.-% eines nicht-faserförmigen und nicht-geschäumten gemahlenen Glases mit einem d90 von 10 bis 200 µm, bevorzugt 20 bis 150 µm, besonders bevorzugt 35 bis 80 µm.

Zur Klarstellung sei angemerkt, dass vom Rahmen der vorliegenden Erfindung alle nachfolgend aufgeführten allgemeinen oder in Vorzugsbereichen genannten Definitionen und Parameter in beliebigen Kombinationen umfasst sind.

In einer besonders bevorzugten Ausführungsform ist das nicht-faserförmige nicht-geschäumte gemahlene Glas mit
C') mindestens einem Aminoalkyltrialkoxysilan, bevorzugt in Mengen von 0,01 Gew.-% bis 1,5 Gew.-% bezogen auf die Menge des nicht-faserförmigen und nicht-geschäumten gemahlenen Glases beschlichtet.

In einer alternativen, besonders bevorzugten Ausführungsform können die Zusammensetzungen zusätzlich zu den Komponenten A), B), C) beziehungsweise A), B) C) und C') noch D) 0,01 bis 60 Gew.-%, bevorzugt 1 bis 30 Gew.-%, besonders bevorzugt 2 bis 20 Gew.-% mindestens eines halogenhaltigen oder eines weiteren zum Melamincyanurat unterschiedlichen halogenfreien Flammschutzmittels enthalten.

In einer weiteren besonders bevorzugten Ausführungsform können die Zusammensetzungen zusätzlich zu den Komponenten A) bis D) oder anstelle von D) noch E) 0,01 bis 50 Gew.-%, bevorzugt 1 bis 25 Gew.-%, ganz besonders bevorzugt 2 bis 20 Gew.-% mindestens eines Elastomermodifikators enthalten.

In einer weiteren besonders bevorzugten Ausführungsform können die Zusammensetzungen zusätzlich zu den Komponenten A) bis E) oder anstelle von D) und/oder E) noch F) 0,01 bis 5

In einer weiteren besonders bevorzugten Ausführungsform können die Zusammensetzungen zusätzlich zu den Komponenten A) bis E) oder anstelle von D) und/oder E) noch F) 0,01 bis 5 Gew.-%, ganz besonders bevorzugt 0,05 bis 3 Gew.-%, insbesondere bevorzugt 0,1 bis 2 Gew.-% mindestens eines Gleit- und/oder Entformungsmittels enthalten.

In einer weiteren besonders bevorzugten Ausführungsform können die Zusammensetzungen zusätzlich zu den Komponenten A) bis F) oder anstelle von D), E) und/oder F) noch die Komponente G) 0,01 bis 50 Gew.-%, bevorzugt 1 bis 30 Gew.-%, ganz besonders bevorzugt 2 bis 15 Gew.%, insbesondere ganz besonders bevorzugt 2 bis 6 Gew.-% mindestens eines Füllstoffs verschieden von Komponente C) enthalten.

In einer weiteren besonders bevorzugten Ausführungsform können die Zusammensetzungen zusätzlich zu den Komponenten A) bis G) oder anstelle der Komponenten D), E), F) und/oder G) noch H) 0,01 bis 20 Gew.-%, bevorzugt 0,05 bis 10 Gew.-%, ganz besonders bevorzugt 0,1 bis 5 Gew.-% jeweils bezogen auf die Gesamtzusammensetzung wenigstens ein weiteres Additiv enthalten.

In einer besonders bevorzugten Ausführungsform ergänzt sich die Summe der Anteile der Komponenten jeweils zu 100 Gew.-%. Es ist auch möglich, dass die Zusammensetzung nur aus A), B), C) bzw. bevorzugt aus A), B), C) und C') besteht.

Als Komponente A) enthalten die Zusammensetzungen erfindungsgemäß mindestens ein thermoplastisches Polyamid.

Unter thermoplastischen Polyamiden werden in Anlehnung an Hans Domininghaus in "Die Kunststoffe und ihre Eigenschaften", 5. Auflage (1998), S. 14, Polyamide verstanden, deren Molekülketten keine oder auch mehr oder weniger lange und in der Anzahl unterschiedliche Seitenverzweigungen aufweisen, die in der Wärme erweichen und nahezu beliebig formbar sind.

Die erfindungsgemäß bevorzugten Polyamide können nach verschiedenen Verfahren hergestellt und aus sehr unterschiedlichen Bausteinen synthetisiert werden und im speziellen Anwendungsfall allein oder in Kombination mit Verarbeitungshilfsmitteln, Stabilisatoren oder auch polymeren Legierungspartnern, bevorzugt Elastomeren, zu Werkstoffen mit speziell eingestellten Eigenschaftskombinationen ausgerüstet werden. Geeignet sind auch Blends mit Anteilen von anderen Polymeren, bevorzugt von Polyethylen, Polypropylen, ABS, wobei ggf. ein oder mehrere Kompatibilisatoren eingesetzt werden können. Die Eigenschaften der Polyamide lassen sich durch Zusatz von Elastomeren verbessern, z. B. im Hinblick auf die Schlagzähigkeit, insbesondere wenn es verstärkte Polyamide sind. Die Vielzahl der Kombinationsmöglichkeiten ermöglicht eine sehr große Zahl von Produkten mit unterschiedlichsten Eigenschaften.

Zur Herstellung von Polyamiden sind eine Vielzahl von Verfahrensweisen bekannt geworden, wobei je nach gewünschtem Endprodukt unterschiedliche Monomerbausteine, verschiedene Kettenregler zur Einstellung eines angestrebten Molekulargewichtes oder auch Monomere mit reaktiven Gruppen für später beabsichtigte Nachbehandlungen eingesetzt werden.

Die technisch relevanten Verfahren zur Herstellung von Polyamiden laufen meist über die Polykondensation in der Schmelze. In diesem Rahmen wird auch die hydrolytische Polymerisation von Lactamen als Polykondensation verstanden.

Bevorzugt als Komponente A) einzusetzende Polyamide sind teilkristalline Polyamide, die ausgehend von Diaminen und Dicarbonsäuren und/oder Lactamen mit wenigstens 5 Ringgliedern oder entsprechenden Aminosäuren hergestellt werden können.

Als Edukte kommen aliphatische und/oder aromatische Dicarbonsäuren, bevorzugt Adipinsäure, 2,2,4- und 2,4,4-Trimethyladipinsäure, Azelainsäure, Sebazinsäure, Isophthalsäure, Terephthalsäure, aliphatische und/oder aromatische Diamine, bevorzugt Tetramethylendiamin, Hexamethylendiamin, 1,9-Nonandiamin, 2,2,4- und 2,4,4-Trimethylhexamethylendiamin, die isomeren Diaminodicyclohexylmethane, Diaminodicyclohexylpropane, Bis-aminomethylcyclohexan, Phenylendiamine, Xylylendiamine, Aminocarbonsäuren, bevorzugt Aminocapronsäure oder die entsprechenden Lactame in Betracht. Copolyamide aus mehreren der genannten Monomeren sind eingeschlossen.

Besonders bevorzugt werden Caprolactame, ganz besonders bevorzugt wird ε-Caprolactam eingesetzt.

Besonders geeignet sind weiterhin die meisten auf PA6, PA66 und anderen aliphatischen oder/und aromatischen Polyamiden bzw. Copolyamiden basierenden Compounds, bei denen auf eine Polyamidgruppe in der Polymerkette 3 bis 11 Methylengruppen kommen.

Ganz besonders bevorzugt sind aliphatische Polyamide, insbesondere ganz besonders bevorzugt sind PA6 und PA66.

In einer bevorzugten Ausführungsform enthalten die erfindungsgemäßen Zusammensetzungen neben dem erfindungsgemäß einzusetzenden thermoplastischen Polyamid wenigstens ein weiteres thermoplastisches Polymer, besonders bevorzugt wenigstens ein anderes Polyamid.

Den neben dem thermoplastischen Polyamid in einer bevorzugten Ausführungsform zusätzlich einzusetzenden Polymeren können übliche Additive, insbesondere Entformungsmittel, Stabilisatoren und/oder Fließhilfsmittel in der Schmelze zugemischt oder auf der Oberfläche aufgebracht werden. Ausgangsstoffe für die thermoplastischen Polyamide der Komponente A) können synthetisch z.B. aus petrochemischen Rohstoffen und/oder über chemische oder biochemische Prozesse aus nachwachsenden Rohstoffen hervorgegangen sein.

Als Komponente B) enthalten die erfindungsgemäßen Zusammensetzungen 0,01 bis 40 Gew.-% Melamincyanurat. Unter Melamincyanurat versteht man das Reaktionsprodukt aus vorzugsweise äquimolaren Mengen von Melamin und Cyanursäure bzw. Isocyanursäure. Hierzu zählen u.a. sämtliche handelsüblichen und kommerziell verfügbaren Produktqualitäten. Beispiele hierfür sind u.a. Melapur® MC 25 und Melapur® MC50 (Fa. BASF, Ludwigshafen, Deutschland). Das erfindungsgemäß einzusetzende Melamincyanurat besteht bevorzugt aus Partikeln mit mittleren Teilchendurchmessem von 0,1 µm bis 100 µm, besonders bevorzugt von 0,1 µm bis 30 µm, ganz besonders bevorzugt 0,1 µm bis 7 µm und kann oberflächenbehandelt bzw. mit bekannten Mitteln beschichtet bzw. beschlichtet sein. Hierzu zählen bevorzugt organische Verbindungen, die in monomerer, oligomerer und/ oder polymerer Form auf das Melamincyanurat aufgebracht sein können. Insbesondere bevorzugt können Beschichtungssysteme verwendet werden, die auf Siliziumhaltigen Verbindungen, insbesondere organofunktionalisierten Silanen oder Organosiloxanen basieren. Beschichtungen mit anorganischen Komponenten sind ebenfalls möglich.

Als Komponente C) enthalten die Zusammensetzungen nicht-faserförmiges und nicht-geschäumtes gemahlenes Glas mit einer Teilchengrößenverteilung, die einen d90 von 10 bis 200 µm, bevorzugt 20 bis 150 µm, besonders bevorzugt 35 bis 80 µm aufweist. Hierbei wird bevorzugt solches nicht-faserförmiges und nicht-geschäumtes gemahlenes Glas eingesetzt, das weiterhin einen d10 von 0,6 bis 10 µm, bevorzugt 0,8 bis 6 µm, besonders bevorzugt 1,0 bis 5 µm aufweist. Dabei ist solches nicht-faserförmiges und nicht-geschäumtes gemahlenes Glas ganz besonders bevorzugt, das ferner einen d50 von 3 bis 50 µm, bevorzugt 5 bis 40 µm, besonders bevorzugt 7 bis 30 µm aufweist

Bezüglich der d10, d50 und d90-Werte, ihrer Bestimmung und ihrer Bedeutung sei auf Chemie Ingenieur Technik (72) S. 273-276, 3/2000, Wiley-VCH Verlags GmbH, Weinheim, 2000 verwiesen, wonach der
- d10-Wert: diejenige Partikelgröße ist, unterhalb derer 10 % der Partikelmenge liegen,
- d50-Wert: diejenige Partikelgröße ist, unterhalb derer 50 % der Partikelmenge liegen (Medianwert)
und der
- d90-Wert: diejenige Partikelgröße ist, unterhalb derer 90 % der Partikelmenge liegen.

Bevorzugt weist ein derartiges nicht-faserförmiges und nicht-geschäumtes gemahlenes Glas eine mittlere Teilchengröße von 3 bis 60µm, insbesondere bevorzugt von 15 bis 30µm auf.

Die Angaben der Teilchengrößenverteilung bzw. der Teilchengrößen beziehen sich hierbei auf sogenannte oberflächenbasierte Teilchengrößen, jeweils vor Einarbeitung in die thermoplastische Formmasse. Hierbei werden die Durchmesser der Flächen der jeweiligen Glaspartikel mit den Flächen imaginärer sphärischer Teilchen (Kugeln) in Beziehung gesetzt. Dies geschieht mit einem nach dem Prinzip der Laserverdunklung arbeitenden Teilchengrößenanalysator der Fa. Ankersmid (Eye Tech® mit der darin enthaltender EyeTech®-Software und ACM-104 Messzelle, Ankersmid Lab, Oosterhout, Niederlande).

Bevorzugt ist das nicht-faserförmige und nicht-geschäumte gemahlene Glas von partikelförmiger, nicht zylindrischer Gestalt und hat ein Längen- zu Dickenverhältnis kleiner 5, bevorzugt kleiner als 3, besonders bevorzugt kleiner 2.

Zur Abgrenzung von der vorliegenden Erfindung wird unter geschäumtem Glas, häufig auch Blähglas genannt, ein Glas verstanden, in dem Gasbläschen beispielsweise aus Luft oder Kohlendioxid eingeschlossen sind. Dieser Einschluss von Gas führt jedoch im Gegensatz zu dem erfindungsgemäß einzusetzenden nicht-geschäumten Glas zu einer Verringerung der Dichte. Das erfindungsgemäß einzusetzende nicht-geschäumte und nicht-faserförmige gemahlene Glas erfährt also keine Dichte-Verringerung durch etwaige Gaseinschlüsse.

Zur Abgrenzung von der vorliegenden Erfindung wird unter faserförmigem Glas eine Glasgeometrie mit zylindrischem oder ovalen Querschnitt verstanden, die ein Längen- zu Durchmesserverhältnis (L/D-Verhältnis) größer 5 aufweist. Das als Komponente B) einzusetzende nicht-geschäumte und nicht faserförmige gemahlene Glas ist deshalb zudem dadurch gekennzeichnet, dass es nicht die für faserförmiges Glas typische Glasgeometrie mit zylindrischem oder ovalen Querschnitt mit einem Längen- zu Durchmesserverhältnis (L/D-Verhältnis) größer 5 aufweist.

Das erfindungsgemäß einzusetzende nicht-geschäumte und nicht-faserförmige gemahlene Glas wird bevorzugt durch Mahlung von Glas mit einer Mühle, bevorzugt einer Kugelmühle und besonders bevorzugt mit anschließender Sichtung bzw. Siebung erhalten. Als Ausgangsmaterial kommen alle geometrischen Formen von erstarrtem Glas in Betracht.

Bevorzugte Ausgangsmaterialien für die Vermahlung zu erfindungsgemäß einzusetzendem nicht-faserförmigem und nicht-geschäumtem gemahlenem Glas sind auch Glasabfälle, wie sie insbesondere bei der Herstellung von Glaserzeugnissen als unerwünschtes Nebenprodukt und / oder als nicht spezifikationsgerechtes Hauptprodukt (sogenannte Offspec-Ware) anfallen. Hierzu gehört insbesondere Abfall-, Recycling- und Bruchglas wie es insbesondere bei der Herstellung von Fenster- oder Flaschenglas, sowie bei der Herstellung von glashaltigen Füll- und Verstärkungsstoffen insbesondere in Form von sogenannten Schmelzekuchen anfallen kann. Das Glas kann gefärbt sein, wobei nicht-gefärbtes Glas als Ausgangsmaterial bevorzugt ist.

Als Ausgangsglas für die Vermahlung kommen prinzipiell alle Glasarten in Betracht wie sie z.B. in DIN1259-1 beschrieben sind. Bevorzugt sind Kalk-Natron-Glas, Floatglas, Quarzglas, Bleikristallglas, Borsilikatglas und E-Glas, wobei Kalk-Natron-Glas, Borsilikatglas und E-Glas besonders bevorzugt sind und E-Glas ganz besonders bevorzugt ist. Bezüglich physikalischer Daten und Zusammensetzung von E-Glas sei auf http://wiki.r-g.de/index.php?title=Glasfasern verwiesen. Erfindungsgemäß insbesondere bevorzugt einzusetzendes nicht-faserförmiges und nicht-geschäumtes gemahlenes E-Glas zeichnet sich demnach durch wenigstens eines der nachfolgend genannten Merkmale aus:

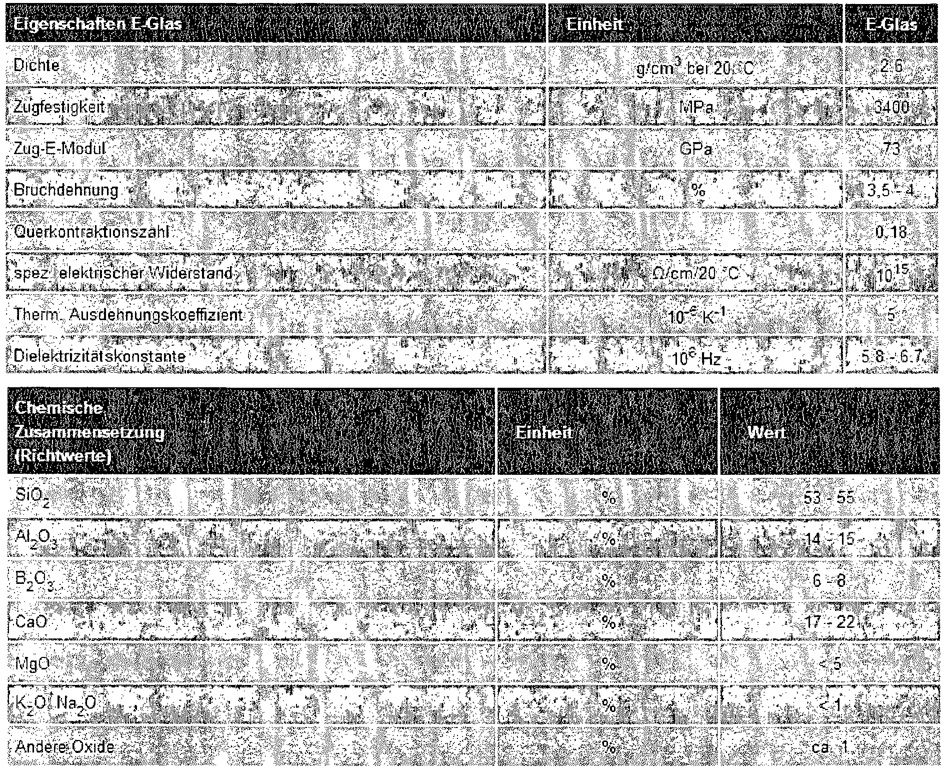

Ebenfalls besonders bevorzugt für die Herstellung des erfindungsgemäß einzusetzenden nicht-geschäumten und nicht-faserförmigen Glases sind Glasarten, bei denen der Gehalt an K₂O kleiner oder gleich 2 Gew.-% bezogen auf alle Komponenten des Glases ist. Das erfindungsgemäß einzusetzende nicht-geschäumte und nicht-faserförmige gemahlene Glas kann beispielsweise von der Firma VitroMinerals, Covington, GA, USA bezogen werden. Es wird als sogenanntes CS Glass Powder in den Spezifikationen CS-325, CS-500 und CS-600 angeboten.(siehe auch www.glassfillers.com oder Chris DeArmitt, Additives Feature, Mineral Fillers , COMPOUNDING WORLD, Februar 2011, Seiten 28-38 bzw. www.compoundingworld.com). Alternativ kann auch MF7900 der Lanxess Deutschland GmbH eingesetzt werden, ein nicht-faserförmiges und nicht-geschäumtes gemahlenes Glas auf Basis E-Glas enthaltend ca. 0,1 Gew.-% Triethoxy(3-aminopropyl)silan-Schlichte C') mit einem d90 von 54µm, einem d50 von 14µm, einem d10 von 2,4µm und einer mittleren Teilchengröße von 21µm, jeweils bezogen auf die Teilchenoberfläche.

Erfindungsgemäß bevorzugt ist das einzusetzende nicht-geschäumte und nicht-faserförmige gemahlene Glas mit einer Oberflächenmodifizierung oder Schlichte auf Basis von Aminoalkyltrialkoxysilan versehen. In alternativen oder bevorzugten Ausführungsformen kann das nicht-geschäumte und nicht-faserförmige gemahlene Glas mit zusätzlicher Oberflächenmodifizierung oder Schlichte auf Silan- bzw. Siloxanbasis versehen sein, bevorzugt mit Glycidyl-, Carboxyl, Alkenyl-, Acryloxyalkyl- und/oder Methacryloxyalkyl- funktionalisierten Trialkoxysilanen oder deren wässriger Hydrolysate sowie Kombinationen daraus.

Ganz besonders bevorzugt sind als C') Oberflächenmodifzierungen mit Aminoalkyl-trialkoxysilanen, insbesondere Aminopropyltrimethoxysilan, Aminobutyltrimethoxysilan, Aminopropyltriethoxysilan, Aminobutyltriethoxysilan oder deren wässrige Hydrolysate, wobei Aminopropyltriethoxysilan insbesondere ganz besonders bevorzugt ist.

Die Aminoalkyl-trialkoxysilane der Komponente C') werden in Mengen von 0,01 Gew.-% bis 1,5 Gew.-%, bevorzugt in Mengen von 0,05 Gew.-% bis 1,0 Gew.-% und besonders bevorzugt in Mengen von 0,1 Gew.-% bis 0,5 Gew.-% bezogen auf das nicht-geschäumte und nicht-faserförmige gemahlene Glas C) zur Oberflächenbeschichtung eingesetzt.

Das Ausgangsglas für die Vermahlung kann bereits mit Oberflächenmodifizierung oder Schlichte behandelt sein. Ebenso kann das erfindungsgemäß einzusetzende nicht-geschäumte und nicht-faserförmige gemahlene Glas nach der Vermahlung mit Oberflächenmodifizierung oder Schlichte behandelt werden.

Das erfindungsgemäß einzusetzende nicht-geschäumte und nicht-faserförmige gemahlene Glas kann bedingt durch die Verarbeitung zur erfindungsgemäßen Zusammensetzung bzw. zu Formkörpern aus der erfindungsgemäßen Zusammensetzung bzw. im Formkörper einen kleineren d90- bzw. d50-Wert bzw. d10-Wert bzw. eine kleinere mittlere Teilchengröße aufweisen, als die ursprünglich eingesetzten gemahlenen Partikel.

In einer bevorzugten Ausführungsform können die erfindungsgemäßen Zusammensetzungen als Komponente D) mindestens ein halogenhaltiges oder ein neben der Komponente B) weiteres halogenfreies von Komponente B) unterschiedliches Flammschutzmittel enthalten. Als Flammschutzmittel kommen phosphorhaltige Flammschutzmittel ausgewählt aus den Gruppen der mono- und oligomeren Phosphor- und Phosphonsäureester, Phosphonatamine, Phosphonate, Phosphinate, besonders bevorzugt Metall-dialkylphophinate, insbesondere Aluminium-tris[dialkylphosphinate] und Zink-bis[dialkylphosphinate], Phosphite, Hypophosphite, Phosphinoxide und Phosphazene in Frage. Hierbei sind Metalldialkylphosphinate bevorzugt, wobei Aluminium-tris[dialkylphosphinat] und Zink-bis[dialkylphosphinat] ganz besonders bevorzugt ist.

Bevorzugt werden stickstoffhaltige Flammschutzmittel einzeln oder im Gemisch eingesetzt. Hervorzuheben sind Melaminoxalat, Melaminphosphat prim., Melaminphosphat sec. und Melaminpyrophosphat sec., Umsetzungsprodukte des Melamins mit kondensierten Phosphorsäuren bzw. Umsetzungsprodukte von Kondensationsprodukten des Melamins mit Phosphorsäure oder kondensierten Phosphorsäuren, insbesondere Melaminpolyphosphat, sowie die Umsetzungsprodukte von Melamin und Polyphosphorsäure mit basischen Aluminium-, Magnesium- und/oder Zinkverbindungen, außerdem Melamincyanurat sowie Neopentylglycolborsäuremelamin. Ebenfalls geeignet sind Guanidinsalze wie Guanidincarbonat, Guanidincyanurat prim., Guanidinphosphat prim., Guanidinphosphat sec., Guanidinsulfat prim., Guanidinsulfat sec., Pentaerythritborsäureguanidin, Neopentylglycolborsäureguanidin, Harnstoffphosphat sowie Harnstoffcyanurat. Darüber hinaus können Kondensationsprodukte des Melamins, insbesondere Melem, Melam, Melon bzw. höherkondensierte Verbindungen dieses Typs und deren Umsetzungsprodukte mit kondensierten Phosphorsäuren Verwendung finden. Geeignet sind ebenfalls Tris(hydroxyethyl)isocyanurat oder dessen Umsetzungsprodukte mit Carbonsäuren, Benzoguanamin und dessen Addukte bzw. Salze sowie dessen am Stickstoff substituierten Produkte sowie deren Salze und Addukte. Als weitere stickstoffhaltige Komponenten kommen Allantoin-Verbindungen, sowie deren Salze mit Phosphorsäure, Borsäure oder Pyrophosphorsäure sowie Glycolurile oder deren Salze in Frage.

Es können auch anorganische stickstoffhaltige Verbindungen, bevorzugt Ammoniumsalze, insbesondere Ammoniumpolyphosphat verwendet werden.

Besonders bevorzugtes stickstoffhaltiges Flammschutzmittel sind zusätzlich zur Komponente B) Melamincyanurat das Melaminpolyphosphat.

Als halogenhaltige Flammschutzmittel können handelsübliche organische Halogenverbindungen mit Synergisten einzeln oder im Gemisch eingesetzt werden. Hier seien insbesondere folgende bromierte und chlorierte Verbindungen als bevorzugt genannt: Ethylen-1,2-bistetrabromphthalimid, epoxidiertes Tetrabrombisphenol-A-Harz, Tetrabrombisphenol-A-oligocarbonat, Tetrachlorbisphenol-A-oligocarbonat, Pentabrompolyacrylat, bromiertes Polystyrol, Bis(pentabromphenyl)-ethan. Als Synergisten sind z.B. Antimonverbindungen, insbesondere Natriumantimonat, Antimontrioxid und Antimonpentoxid geeignet.

Auch andere hier nicht speziell erwähnte Flammschutzmittel oder Flammschutzmittelsynergisten können zum Einsatz kommen. Hierzu zählen auch rein anorganische Phosphorverbindungen, insbesondere roter Phosphor oder Borphosphathydrat. Ferner können auch Salze aliphatischer und aromatischer Sulfonsäuren und mineralische Flammschutzadditive wie Aluminium- und/oder Magnesiumhydroxid, Ca-Mg-Carbonat-Hydrate (z.B. DE-A 4 236 122) eingesetzt werden. In Frage kommen ferner Flammschutzmittelsynergisten aus der Gruppe der sauerstoff- stickstoff- oder schwefelhaltigen Metallverbindung, bevorzugt Zinkoxid, Zinkborat, Zinkstannat, Zinkhydroxystannat, Zinksulfid, Molybdänoxid, Titandioxid, Magnesiumoxid, Magnesiumcarbonat, Calciumcarbonat, Calciumoxid, Titannitrid, Bornitrid, Magnesiumnitrid, Zinknitrid, Zinkphosphat, Calciumphosphat, Calciumborat, Magnesiumborat oder deren Mischungen.

Weitere bevorzugt geeignete Flammschutzadditive sind Kohlebildner, besonders bevorzugt Phenol-Formaldehydharze, Polycarbonate, Polyimide, Polysulfone, Polyethersulfone oder Polyetherketone sowie Antitropfmittel, insbesondere Tetrafluorethylenpolymerisate.

Die Flammschutzmittel können in Reinform, sowie über Masterbatche oder Kompaktate zugesetzt werden.

Die in einer bevorzugten Ausführungsform der erfindungsgemäßen Zusammensetzungen als Komponente E) einzusetzenden Elastomermodifikatoren umfassen u.a. ein oder mehrere Pfropfpolymerisate von
- E.1: 5 bis 95 Gew.-%, vorzugsweise 30 bis 90 Gew.-%, wenigstens eines Vinylmonomeren auf
- E.2: 95 bis 5 Gew.%, vorzugsweise 70 bis 10 Gew.-% einer oder mehrerer Pfropfgrundlagen mit Glasübergangstemperaturen < 10°C, vorzugsweise < 0°C, besonders bevorzugt <-20°C.

Die Pfropfgrundlage E.2 hat im allgemeinen eine mittlere Teilchengröße (d50-Wert) von 0,05 bis 10 µm, vorzugsweise 0,1 bis 5 µm, besonders bevorzugt 0,2 bis 1 µm.

Monomere E.1 sind vorzugsweise Gemische aus
- E.1.1: 50 bis 99 Gew.-% Vinylaromaten und/oder kernsubstituierten Vinylaromaten, insbesondere Styrol, α-Methylstyrol, p-Methylstyrol, p-Chlorstyrol, und/oder Methacrylsäure-(C1-C8)-Alkylester, insbesondere. Methylmethacrylat, Ethylmethacrylat) und
- E.1.2: 1 bis 50 Gew.-% Vinylcyanide, insbesondere ungesättigte Nitrile wie Acrylnitril und Methacrylnitril, und/oder (Meth)Acrylsäure-(C1-C8)-Alkylester, insbesondere Methylmethacrylat, Glycidylmethacrylat, n-Butylacrylat, t-Butylacrylat, und/oder Derivate ,insbesondere Anhydride und Imide ungesättigter Carbonsäuren, insbesondere Maleinsäureanhydrid oder N-Phenyl-Maleinimid).

Bevorzugte Monomere E.1.1 sind ausgewählt aus mindestens einem der Monomere Styrol, α-Methylstyrol und Methylmethacrylat, bevorzugte Monomere E.1.2 sind ausgewählt aus mindestens einem der Monomere Acrylnitril, Maleinsäureanhydrid, Glycidylmethacrylat und Methylmethacrylat.

Besonders bevorzugte Monomere sind E.1.1 Styrol und E.1.2 Acrylnitril.

Für die in den Elastomermodifikatoren einzusetzenden Pfropfpolymerisate geeignete Pfropfgrundlagen E.2 sind beispielsweise Dienkautschuke, EPDM-Kautschuke, also solche auf Basis Ethylen/Propylen und gegebenenfalls Dien, ferner Acrylat-, Polyurethan-, Silikon-, Chloropren und Ethylen/Vinylacetat-Kautschuke. .EPDM steht für Ethylen-Propylen-Dien-Kautschuk.

Bevorzugte Pfropfgrundlagen E.2 sind Dienkautschuke, insbesondere auf Basis Butadien, Isopren etc oder Gemische von Dienkautschuken oder Copolymerisate von Dienkautschuken oder deren Gemischen mit weiteren copolymerisierbaren Monomeren, insbesondere gemäß E.1.1 und E.1.2, mit der Maßgabe, dass die Glasübergangstemperatur der Komponente E.2 bei <10°C, vorzugsweise bei <0°C, besonders bevorzugt bei <-10°C liegt.

Besonders bevorzugte Propfgrundlagen E.2 sind ABS-Polymerisate (Emulsions-, Masse- und Suspensions-ABS) wobei ABS für Acrylnitril-Butadien-Styrol steht, wie sie z. B. in der DE-A 2 035 390 (=US-A 3 644 574) oder in der DE-A 2 248 242 (=GB-A 1 409 275) bzw. in Ullmann, Enzyklopädie der Technischen Chemie, Bd. 19 (1980), S. 280 ff. beschrieben sind. Der Gelanteil der Pfropfgrundlage E.2 beträgt bevorzugt mindestens 30 Gew.-%, besonders bevorzugt mindestens 40 Gew.-% (in Toluol gemessen).

Die Elastomermodifikatoren bzw. Pfropfpolymerisate werden durch radikalische Polymerisation, bevorzugt durch Emulsions-, Suspensions-, Lösungs- oder Massepolymerisation, insbesondere durch Emulsions- oder Massepolymerisation hergestellt.

Besonders geeignete Pfropfkautschuke sind auch ABS-Polymerisate, die durch Redox-Initiierung mit einem Initiatorsystem aus organischem Hydroperoxid und Ascorbinsäure gemäß US-A 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten auch solche Produkte verstanden, die durch (Co)Polymerisation der Pfropfmonomere in Gegenwart der Pfropfgrundlage gewonnen werden und bei der Aufarbeitung mit anfallen.

Ebenfalls geeignete Acrylatkautschuke basieren auf Pfropfgrundlagen E.2 die vorzugsweise Polymerisate aus Acrylsäurealkylestern, gegebenenfalls mit bis zu 40 Gew.-%, bezogen auf E.2 anderen polymerisierbaren, ethylenisch ungesättigten Monomeren. Zu den bevorzugten polymerisierbaren Acrylsäureestern gehören C1-C8-Alkylester, vorzugsweise Methyl-, Ethyl-, Butyl-, n-Octyl- und 2-Ethylhexylester; Halogenalkylester, vorzugsweise Halogen-C1-C8-alkyl-ester, wie Chlorethylacrylat, Glycidylester sowie Mischungen dieser Monomeren. Dabei sind Propfpolymerisate mit Butylacrylat als Kern und Methylmethacrylaten als Schale, insbesondere. Paraloid® EXL2300, Fa. Dow Coming Corporation, Midland Michigan, USA, besonders bevorzugt.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, bevorzugt Ethylenglykoldimethacrylat, Allylmethacrylat; mehrfach ungesättigte heterocyclische Verbindungen, bevorzugt Trivinyl- und Triallylcyanurat; polyfunktionelle Vinylverbindungen, bevorzugt Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5, insbesondere 0,05 bis 2 Gew.-%, bezogen auf die Pfropfgrundlage E.2.

Bei cyclischen vernetzenden Monomeren mit mindestens 3 ethylenisch ungesättigten Gruppen ist es vorteilhaft, die Menge auf unter 1 Gew.-% der Pfropfgrundlage E.2 zu beschränken.

Bevorzugte "andere" polymerisierbare, ethylenisch ungesättigte Monomere, die neben den Acrylsäureestern gegebenenfalls zur Herstellung der Pfropfgrundlage E.2 dienen können, sind Acrylnitril, Styrol, α-Methylstyrol, Acrylamide, Vinyl-C1-C6-alkylether, Methylmethacrylat, Glycidylmethacrylat, Butadien. Bevorzugte Acrylatkautschuke als Pfropfgrundlage E.2 sind Emulsionspolymerisate, die einen Gelgehalt von mindestens 60 Gew.-% aufweisen.

Weitere bevorzugt geeignete Pfropfgrundlagen gemäß E.2 sind Silikonkautschuke mit pfropfaktiven Stellen, wie sie in den DE-A 3 704 657 (= US 4 859 740), DE-A 3 704 655 (= US 4 861 831), DE-A 3 631 540 (= US 4 806 593) und DE-A 3 631 539 (= US 4 812 515) beschrieben werden.

Neben Elastomermodifikatoren, die auf Propfpolymeren beruhen, können ebenfalls nicht auf Propfpolymeren basierende Elastomermodifikatoren eingesetzt werden, die Glasübergangstemperaturen < 10°C, vorzugsweise < 0°C, besonders bevorzugt < -20°C aufweisen. Bevorzugt gehören hierzu Elastomere mit einer Blockcopolymerstruktur sowie weiterhin thermoplastisch aufschmelzbare Elastomere , insbesondere EPM-, EPDM- und/oder SEBS-Kautschuke (EPM = Ethylen-Propylen-Copolymer, EPDM = Ethylen-Propylen-Dien-Kautschuk und SEBS = Styrol-Ethen-Buten-Styrol Copolymer).

Die in einer bevorzugten Ausführungsform der erfindungsgemäßen Zusammensetzungen als Komponente F) einzusetzenden Gleit- und/oder Entformungsmittel sind bevorzugt langkettige Fettsäuren, insbesondere Stearinsäure oder Behensäure, deren Salze, insbesondere Ca- oder Zn-Stearat, sowie deren Esterderivate oder Amidderivate, insbesondere Ethylen-bis-stearylamid, Montanwachse sowie niedermolekulare Polyethylen- bzw. Polypropylenwachse. Montanwachse im Sinne der vorliegenden Erfindung sind Mischungen aus geradkettigen, gesättigten Carbonsäuren mit Kettenlängen von 28 bis 32 C-Atomen. Erfindungsgemäß werden besonders bevorzugt Gleit- und/oder Entformungsmittel aus der Gruppe der Ester, oder Amide gesättigter oder ungesättigter aliphatischer Carbonsäuren mit 8 bis 40 C-Atomen mit aliphatischen gesättigten Alkoholen oder Aminen mit 2 bis 40 C-Atomen sowie Metallsalze gesättigter oder ungesättigter aliphatischer Carbonsäuren mit 8 bis 40 C-Atomen eingesetzt, wobei Ethylen-bis-stearylamid, Calciumstearat und/oder Ethylenglycoldimontanat, hier insbesondere Licowax^{®} E der Fa. Clariant, Muttenz, Basel ganz besonders bevorzugt ist und Ethylen-bis-stearylamid insbesondere ganz besonders bevorzugt ist.

Als Komponente G) können die Zusammensetzungen in einer weiteren bevorzugten Ausführungsform mindestens einen weiteren Füllstoff oder Verstärkungsstoff enthalten, der von der Komponente C) verschieden ist.

Dabei können auch Mischungen aus zwei oder mehreren unterschiedlichen Füllstoffen und/oder Verstärkungsstoffen, bevorzugt auf Basis von Talk, Glimmer, Silikat, Quarz, Titandioxid, Wollastonit, Kaolin, amorphe Kieselsäuren, nanoskalige Mineralien, besonders bevorzugt Montmorillonite oder Nano-Böhmit, Magnesiumcarbonat, Kreide, Feldspat, Bariumsulfat, Glaskugeln und/oder faserförmige Füllstoffe und/oder Verstärkungsstoffen auf der Basis von Kohlenstofffasern und/oder Glasfasern eingesetzt werden. Bevorzugt werden mineralische teilchenförmige Füllstoffe auf der Basis von Talk, Glimmer, Silikat, Quarz, Titandioxid, Wollastonit, Kaolin, amorphe Kieselsäuren, Magnesiumcarbonat, Kreide, Feldspat, Bariumsulfat und/oder Glasfasern eingesetzt. Besonders bevorzugt werden mineralische teilchenförmige Füllstoffe auf der Basis von Talk, Wollastonit, Kaolin und/oder Glasfasern eingesetzt, wobei Glasfasern ganz besonders bevorzugt sind.

Besonders bevorzugt werden ferner auch nadelförmige mineralische Füllstoffe eingesetzt. Unter nadelförmigen mineralischen Füllstoffen wird erfindungsgemäß ein mineralischer Füllstoff mit stark ausgeprägtem nadelförmigen Charakter verstanden. Bevorzugt seien nadelförmige Wollastonite genannt. Bevorzugt weist das Mineral ein Länge : Durchmesser - Verhältnis von 2:1 bis 35:1, besonders bevorzugt von 3:1 bis 19:1, insbesondere bevorzugt von 4:1 bis 12:1 auf. Die mittlere Teilchengröße der erfindungsgemäßen nadelförmigen Mineralien liegt bevorzugt bei kleiner 20 µm, besonders bevorzugt bei kleiner 15 µm, insbesondere bevorzugt bei kleiner 10 µm, bestimmt mit einem CILAS GRANULOMETER.

Der Füllstoff und/oder Verstärkungsstoff verschieden von Komponente C) kann in einer bevorzugten Ausführungsform oberflächenmodifiziert sein, vorzugsweise mit einem Haftvermittler bzw. Haftvermittlersystem, besonders bevorzugt auf Silanbasis. Die Vorbehandlung ist jedoch nicht unbedingt erforderlich. Insbesondere bei Verwendung von Glasfasern können zusätzlich zu Silanen auch Polymerdispersionen, Filmbildner, Verzweiger und/oder Glasfaserverarbeitungshilfsmittel verwendet werden.

Die erfindungsgemäß ganz besonders bevorzugt als Komponente G) einzusetzenden Glasfasern, die im Allgemeinen einen Faserdurchmesser zwischen 7 und 18 µm, bevorzugt zwischen 9 und 15 µm haben, werden als Endlosfasern oder als geschnittene oder gemahlene Glasfasern zugesetzt. Zur Komponente C) unterschiedliche faserförmige gemahlene Glasfasern können erhalten werden, wenn Endlosfasern oder geschnittene Glasfasern einem zusätzlichen Mahlprozess, insbesondere in einer Kugelmühle unterworfen werden. Diese Fasern können mit einem geeigneten Schlichtesystem und einem Haftvermittler bzw. Haftvermittlersystem, bevorzugt auf Silanbasis, ausgerüstet sein.

Besonders bevorzugte Haftvermittler auf Silanbasis für die Vorbehandlung sind Silanverbindungen der allgemeine Formel (I)

(I) (X-(CH₂)_{q})k-Si-(O-CrH2r+1)4-k

worin
- X: für NH₂-, Carboxyl-, HO- oder 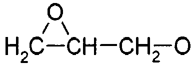 steht,
- q: für eine ganze Zahl von 2 bis 10, bevorzugt 3 bis 4 steht,
- r: für eine ganze Zahl von 1 bis 5, bevorzugt 1 bis 2 steht und
- k: für eine ganze Zahl von 1 bis 3, bevorzugt 1 steht.

Insbesondere bevorzugte Haftvermittler sind Silanverbindungen aus der Gruppe Aminopropyltrimethoxysilan, Aminobutyltrimethoxysilan, Aminopropyltriethoxysilan, Aminobutyltriethoxysilan sowie die entsprechenden Silane, welche als Substituent X eine Glycidyl- oder eine Carboxylgruppe enthalten.

Für die Ausrüstung der Füllstoffe werden die Silanverbindungen im Allgemeinen in Mengen von 0,05 bis 2 Gew.-%, vorzugsweise 0,25 bis 1,5 Gew.-% und insbesondere 0,5 bis 1 Gew.-% bezogen auf den mineralischen Füllstoff zur Oberflächenbeschichtung eingesetzt.

Die zur Komponente C) unterschiedlichen teilchenförmigen Füllstoffe der Komponente G) können bedingt durch die Verarbeitung zur Zusammensetzung bzw. Formkörper aus der Zusammensetzung bzw. im Formkörper einen kleineren d97- bzw. d50-Wert aufweisen, als die ursprünglich eingesetzten Füllstoffe. Glasfasern der Komponente G) können bedingt durch die Verarbeitung zur Zusammensetzung bzw. Formkörper aus der Zusammensetzung bzw. im Formkörper kürzere Längenverteilungen als ursprünglich eingesetzt aufweisen. Bevorzugt werden als Komponente G) Füll- und Verstärkungsstoffe verschieden von C) in Mengen von 1 bis 30 Gew.-%, besonders bevorzugt von 2 bis 15 Gew.-% und ganz besonders bevorzugt von 3 bis 7 Gew.-% jeweils bezogen auf die Gesamtformmasse eingesetzt.

Als Komponente H) können die erfindungsgemäßen Zusammensetzungen noch weitere Additive enthalten. Bevorzugte Additive im Sinne der vorliegenden Erfindung sind UV-Stabilisatoren, Gammastrahlenstabilisatoren, Hydrolysestabilisatoren, Thermostabilisatoren, Antistatika, Emulgatoren, Nukleierungsmittel, Weichmacher, Verarbeitungshilfsmittel, Schlagzähmodifikatoren Farbstoffe und Pigmente. Die Additive können alleine oder in Mischung bzw. in Form von Masterbatchen eingesetzt werden.

Als UV-Stabilisatoren werden bevorzugt substituierte Resorcine, Salicylate, Benzotriazole und Benzophenone eingesetzt.

Als Farbmittel werden bevorzugt anorganische Pigmente, insbesondere Titandioxid, Ultramarinblau, Eisenoxid, Zinksulfid oder Ruß, weiterhin organische Pigmente, bevorzugt Phthalocyanine, Chinacridone, Perylene sowie Farbstoffe, bevorzugt Nigrosin und Anthrachinone eingesetzt werden.

Als Thermostabilisator werden bevorzugt sterisch gehinderte Phenole und/oder Phosphite, Hydrochinone, aromatische sekundäre Amine wie Diphenylamine, substituierte Resorcine, Salicylate, Benzotriazole und Benzophenone, sowie verschieden substituierte Vertreter dieser Gruppen oder deren Mischungen eingesetzt. Besonders bevorzugt werden sterisch gehinderte Phenole alleine oder in Kombination mit Phosphiten eingesetzt, wobei die Verwendung von N,N'-Bis[3-(3',5'-di-tert-butyl-4'-hydroxyphenyl)propionyl]hexamethylenediamine (z.B. Irganox® 1098 der Fa. BASF SE, Ludwigshafen. Deutschland) ganz besonders bevorzugt ist.

Als Nukleierungsmittel werden bevorzugt Natrium- oder Calciumphenylphosphinat, Aluminiumoxid oder Siliziumdioxid sowie ganz besonders bevorzugt Talkum eingesetzt, wobei diese Aufzählung nicht abschließend ist.

Als Fließhilfsmittel werden bevorzugt Copolymerisate aus mindestens einem α-Olefin mit mindestens einem Methacrylsäurester oder Acrylsäureester eines aliphatischen Alkohols eingesetzt. Besonders bevorzugt sind dabei Copolymerisate, bei denen das α-Olefin aus Ethen und/oder Propen aufgebaut ist und der Methacrylsäurester oder Acrylsäureester als Alkoholkomponente lineare oder verzweigte Alkylgruppen mit 6 bis 20C-Atomen enthält. Ganz besonders bevorzugt ist Acrylsäure-(2-ethyl)-hexylester. Als Fließhilfsmittel erfindungsgemäß geeignete Copolymerisate zeichnen sich neben der Zusammensetzung auch durch das niedrige Molekulargewicht aus. Dementsprechend sind für die erfindungsgemäß vor thermischem Abbau zu bewahrenden Zusammensetzungen vor allem Copolymerisate geeignet, die einen MFI-Wert gemessen bei 190°C und einer Belastung von 2,16 kg von mindestens 100 g / 10 min, bevorzugt von mindestens 150 g / 10 min, besonders bevorzugt von mindestens 300 g / 10 min aufweisen. Der MFI , Melt-Flow-Index, dient zur Charakterisierung des Flusses einer Schmelze eines Thermoplasten und unterliegt den Normen ISO 1133 oder ASTM D 1238. Der MFI bzw. alle Angaben zum MFI im Rahmen der vorliegenden Erfindung beziehen sich bzw. wurden einheitlich nach ISO 1133 bei 190°C und einem Prüfgewicht von 2,16 kg gemessen bzw. bestimmt.

Bevorzugt als Komponente H) einzusetzende Weichmacher sind Phthalsäuredioctylester, Phthalsäuredibenzylester, Phthalsäurebutylbenzylester, Kohlenwasserstofföle oder N-(n-Butyl)benzolsulfonamid.

Die vorliegende Erfindung betrifft aber auch Erzeugnisse, bevorzugt Fasern, Folien oder Formkörper, erhältlich aus den erfindungsgemäß beschriebenen Zusammensetzungen durch Spritzguss oder Extrusion.

Gegenstand der vorliegenden Anmeldung ist auch die Verwendung der erfindungsgemäßen Zusammensetzungen im Spritzguss, einschließlich der Sonderverfahren GIT (Gasinjektionstechnik), WIT (Wasserinjektionstechnik) und PIT (Projektilinjektionstechnik), im Extrusionsverfahren in der Profil-Extrusion, im Blasformen, besonders bevorzugt Standard-Extrusionsblasformen, 3D-Extrusionsblasformverfahren oder Saugblasformverfahren um daraus erfindungsgemäße Erzeugnisse herzustellen.

Erfindungsgemäße Verfahren zur Herstellung von Erzeugnissen durch Extrusion oder Spritzguß arbeiten bei Schmelzetemperaturen im Bereich von 230 bis 330°C, bevorzugt von 250 bis 300°C sowie gegebenenfalls zusätzlich bei Drücken von maximal 2500 bar, bevorzugt bei Drücken von maximal 2000 bar, besonders bevorzugt bei Drücken von maximal 1500 bar und ganz besonders bevorzugt bei Drücken von maximal 750 bar.

Das Verfahren des Spritzgusses zeichnet sich dadurch aus, dass der Rohstoff, bevorzugt in Granulatform, in einem beheizten zylindrischen Hohlraum aufgeschmolzen (plastifiziert) und als Spritzmasse unter Druck in einem temperierten Hohlraum gespritzt wird. Nach dem Abkühlen (Erstarren) der Masse wird das Spritzgussteil entformt.

### Man unterscheidet

1. Plastifizieren / Aufschmelzen
2. Einspritzphase (Füllvorgang)
3. Nachdruckphase (wegen thermischer Kontraktion bei der Kristallisation)
4. Entformen.

Eine Spritzgießmaschine besteht aus einer Schließeinheit, der Spritzeinheit, dem Antrieb und der Steuerung. Zur Schließeinheit gehören feste und bewegliche Aufspannplatten für das Werkzeug, eine Stirnplatte sowie Säulen und Antrieb der beweglichen Werkzeugaufspannplatte. (Kniehebelgelenk oder hydraulische Schließeinheit).

Eine Spritzeinheit umfasst den elektrisch beheizbaren Zylinder, den Antrieb der Schnecke (Motor, Getriebe) und die Hydraulik zum Verschieben der Schnecke und Spritzeinheit. Die Aufgabe der Spritzeinheit besteht darin, das Pulver bzw. das Granulat aufzuschmelzen, zu dosieren, einzuspritzen und nachzudrücken (wegen Kontraktion). Das Problem des Rückflusses der Schmelze innerhalb der Schnecke (Leckströmung) wird durch Rückstromsperren gelöst.

Im Spritzgießwerkzeug wird dann die einströmende Schmelze gelöst, gekühlt und somit das zu fertigende Bauteil gefertigt. Notwendig dazu sind immer zwei Werkzeughälften. Beim Spritzguss unterscheidet man folgende Funktionskomplexe:
- Angusssystem
- Formbildende Einsätze
- Entlüftung
- Maschinen- und Kraftaufnahme
- Entformungssystem und Bewegungsübertragung
- Temperierung

Die Spritzguss-Sonderverfahren GIT (Gasinjektionstechnik), WIT (Wasserinjektionstechnik) und Projektilinjektionstechnik (PIT) sind spezialisierte Spritzgussverfahren zur Herstellung hohler Werkstücke. Ein Unterschied zum Standard-Spritzguss besteht in einem speziellen Arbeitsschritt gegen Ende der Werkzeugfüllphase bzw. nach einer definierter Teilfüllung der Gussform. Im verfahrensspezifischen Arbeitsschritt wird ein Prozessmedium über einen so genannten Injektor in die schmelzeflüssig Seele des Vorspritzlings zur Hohlraumbildung injiziert. Dabei handelt es sich um Gas - in der Regel Stickstoff - im Fall der GIT und Wasser bei der. Im Falle der PIT wird ein Projektil in die schmelzeflüssige Seele eingeschossen und auf diesem Weg ein Hohlraum ausgebildet.

Im Gegensatz zum Spritzguss wird bei der Extrusion ein endlos geformter Kunststoffstrang, hier ein Polyamid, im Extruder eingesetzt, wobei der Extruder eine Maschine zur Herstellung thermoplastischer Formstücke ist. Man unterscheidet

Einschneckenextruder und Doppelschneckenextruder sowie die jeweiligen Untergruppen konventionelle Einschneckenextruder, förderwirksame Einschneckenextruder, gegenläufige Doppelschneckenextruder und gleichläufige Doppelschneckenextruder.

Profile im Sinne der vorliegenden Erfindung sind (Bau-)Teile, die über ihre gesamte Länge einen identischen Querschnitt aufweisen. Sie können im Profil-Extrusionsverfahren hergestellt werden. Die grundsätzlichen Verfahrensschritte des Profil-Extrusionsverfahrens sind:
1. Plastifizieren und Bereitstellen der thermoplastischen Schmelze in einem Extruder,
2. Extrusion des thermoplastischen Schmelzestrangs durch eine Kalibrierhülse, die den Querschnitt des zu extrudierenden Profils aufweist,
3. Abkühlung des extrudierten Profils in einem Kalibriertisch,
4. Weitertransport des Profils mit einem Abzug hinter dem Kalibriertisch,
5. Ablängen des zuvor endlosen Profils in einer Schneideanlage,
6. Sammeln der abgelängten Profile an einem Sammeltisch.

Eine Beschreibung der Profilextrusion von Polyamid 6 und Polyamid 66 erfolgt in Kunststoff-Handbuch 3/4, Polyamide, Carl Hanser Verlag, München 1998, Seite 374-384.

Blasformverfahren im Sinne der vorliegenden Erfindung sind bevorzugt Standard-Extrusionsblasformen, 3D-Extrusionsblasformen, Saugblasformverfahren und die sequentielle Coextrusion.

Die grundsätzlichen Verfahrensschritte des Standard-Extrusionsblasformens sind gemäß (Thielen, Hartwig, Gust, "Blasformen von Kunststoffhohlkörpern", Carl Hanser Verlag, München 2006, Seiten 15 bis 17):
1. Plastifizieren und Bereitstellen der thermoplastischen Schmelze in einem Extruder,
2. Umlenken der Schmelze in eine senkrechte Fließbewegung nach unten und das Ausformen eines schlauchförmigen Schmelze-"Vorformlings",
3. Umschließen des frei unter dem Kopf hängenden Vorformlings durch eine in der Regel aus zwei Halbschalen bestehenden Form, dem Blasformwerkzeug,
4. Einschieben eines Blasdoms oder einer (ggf. mehrer) Blasnadel(n),
5. Aufblasen des plastischen Vorformlings gegen die gekühlte Wand des Blasformwerkzeugs, wo der Kunststoff abkühlt, erhärtet und die endgültige Form des Formteils annimmt,
6. Öffnen der Form und Entformen des blasgeformten Teils,
7. Entfernen der abgequetschten "Butzen"-Abfälle" an beiden Enden des Blasformteils.

Weitere Schritte der Nachbearbeitung können folgen.

Mittels Standard-Extrusionsblasformen lassen sich auch Erzeugnisse mit komplexer Geometrie und mehrachsigen Krummungen herstellen. Allerdings werden dann Erzeugnisse erhalten, die einen großen Anteil von überschüssigem, abgequetschtem Material enthalten und in großen Bereichen eine Schweißnaht aufweisen.

Beim 3D-Extrusionsblasformen, auch als 3D-Blasformen bezeichnet, wird daher zur Vermeidung von Schweißnähten und zur Reduktion des Materialeinsatzes ein in seinem Durchmesser auf den Artikelquerschnitt angepasster Vorformling mit speziellen Vorrichtungen deformiert und manipuliert und dann direkt in die Blasformkavität eingebracht. Die verbleibende Quetschkante wird somit auf ein Minimum an den Artikelenden reduziert (Thielen, Hartwig, Gust, "Blasformen von Kunststoffhohlkörpern", Carl Hanser Verlag, München 2006, Seite 117-122).

Beim Saugblasformverfahren, auch als Saugblasen bezeichnet, wird der Vorformling direkt aus der Düse des Schlauchkopfes in die geschlossene Blasform gefördert und über einen Luftstrom durch die Blasform hindurch"gesaugt". Nach Austritt des unteren Endes des Vorformlings aus der Blasform wird dieser durch Schließelemente oben und unten abgequetscht, und der Aufblas- und Kühlvorgang schließen sich an (Thielen, Hartwig, Gust, "Blasformen von Kunststoffhohlkörpern", Carl Hanser Verlag, München 2006, Seite 123).

Die erfindungsgemäßen Erzeugnisse finden Anwendung in der Kraftfahrzeug-, Elektro-, Elektronik-, Telekommunikations-, Computerindustrie, im Sport, in der Medizin, im Haushalt, in der Bau- oder in der Unterhaltungsindustrie.

### Beispiele

Zum Nachweis der erfindungemäß beschriebenen Verbesserungen bei Flammwidrigkeit wurden zunächst durch Compoundierung entsprechende Kunststoff-Zusammensetzungen angefertigt. Die einzelnen Komponenten wurden hierzu in einem Zweiwellenextruder (ZSK 25 Compounder der Fa. Coperion Werner & Pfleiderer (Stuttgart, Deutschland)) bei Temperaturen zwischen 250 und 310°C gemischt, als Strang ausgetragen, bis zur Granulierfähigkeit abgekühlt und granuliert. Nach dem Trocknen (in der Regel zwei Tage bei 70°C im Vakuumtrockenschrank) erfolgte die Verarbeitung des Granulates bei Temperaturen zwischen 250 und 300°C zu Normprüfkörpern für die jeweiligen Prüfungen.

Die Flammwidrigkeit der Zusammensetzungen wurde zum einen nach der Methode UL94V (Underwriters Laboratories Inc. Standard of Safety, "Test for Flammability of Plastic Materials for Parts in Devices and Appliances", S. 14 bis S. 18 Northbrook 1998) bestimmt. Die Dicke der Normprüfkörper betrug 0,75mm.

Die Glühdrahtbeständigkeit wurde anhand der Glühdrahtprüfung GWFI (Glow-Wire Flammability-Index) nach IEC 60695-2-12 an Rundplatten mit 0,75 und/oder 1,5mm Dicke bestimmt.

Die Partikelgrößenbestimmung der gemahlenen Glaspartikel erfolgte mit einem laseroptischen Verfahren ("Eye Tech") der Fa. Ankersmid Ltd, Oosterhout, Niederlande in einer Zelle des Typs "ACM-104 Liquid Flow (4x4mm)". Die Messzeit betrug etwa 900sec. Die Auswertung bezieht sich auf die Oberfläche der Glaspartiklel.

In den Versuchen wurden verwendet:
Komponente A: (Durethan^{®} B26, Fa. Lanxess Deutschland GmbH, Leverkusen, Deutschland)
Komponente B: Melamincyanurat, (Melapur^{®} MC25, der Fa. BASF, Ludwigshafen, Deutschland)
Komponente C: MF7900 der Firma. Lanxess Deutschland GmbH, Leverkusen, Deutschland. [Ein nicht-faserförmiges und nicht-geschäumtes gemahlenes Glas auf Basis E-Glas enthaltend ca. 0,1 Gew.-% Triethoxy(3-aminopropyl)silan-Schlichte C') mit einem d90 von 54µm, einem d50 von 14µm, einem d10 von 2,4µm und einer mittleren Teilchengröße von 21µm, jeweils bezogen auf die Teilchenoberfläche].
Komponente E: Schlagzähmodifikator (Paralold^{®} EXL-2300, Fa. Dow Corning Corporation, Midland Michigan, USA)
Komponente F: Entformer (N,N'-Ethylen-bis-stearylamid bzw. Licowax^{®} E der Fa. Clariant GmbH, Muttenz, Schweiz)
Komponente G1: Schnittglasfaser CS 7928 beschlichtet, Fa. Lanxess Deutschland GmbH, Leverkusen, Deutschland)
Komponente G2: gemahlene Schnittglasfaser MF 7982 beschlichtet, Fa. Lanxess Deutschland GmbH, Leverkusen, Deutschland)
Komponente G3: Glaskugeln (Aminoalkyltrialkoxysilanschlichte 0,2 Gew.-%) mit einer typischen Partikelgröße im Bereich von 35 µm (Spheriglass^{®} Potters 3000 CP 0302 von Potters Industries Inc., Valley Forge, USA)
Komponente G4: Blähglasgranulat (Poraver^{®} 0,04, Fa. Bennert Poraver GmbH, Postbauer Heng, Deutschland)
Komponente G5: Mineral Talkum (Luzenac^{®} A60H, Fa. Luzenac Europe SAS, Toulouse, Frankreich)
Komponente G6: Mineral Talkum (Luzenac^{®} 1445, Fa. Luzenac Europe SAS, Toulouse, Frankreich)
Komponente G7: Mineral Wollastonite (Nyglos M3, Fa. Nyco Minerals, New York, USA)
Komponente H1: Thermostabilisator (Irganox^{®} 1098, Fa. BASF, Ludwigshafen, Deutschland)

Die Komponete F stimmt in Art und Menge in den jeweiligen Beispielen und Vergleichsbeispielen überein.

**Tabelle 1**

| | | **1** | **C1** | **C2** | **C3** | **C4** | **2** | **C5** | **3** | **C6** |
|---|---|---|---|---|---|---|---|---|---|---|
| A | [%] | 61,2 | 61,2 | 61,2 | 61,2 | 61,2 | 71,7 | 71,7 | 61,2 | 61,2 |
| C | [%] | 30 | | | | | 20 | | 28 | |
| G1 | [%] | | 30 | | | | | | | 28 |
| G2 | [%] | | | 30 | | | | | 2 | 2 |
| G4 | [%] | | | | 30 | | | 20 | | |
| G5 | [%] | | | | | 30 | | | | |
| B | [%] | 8 | 8 | 8 | 8 | 8 | 7,5 | 7,5 | 8 | 8 |
| F | [%] | 0,3 | 0,3 | 0,3 | 0,3 | 0,3 | 0,3 | 0,3 | 0,3 | 0,3 |
| H1 | [%] | 0,5 | 0,5 | 0,5 | 0,5 | 0,5 | 0,5 | 0,5 | 0,5 | 0,5 |
| GWFI (0,75mm) | °C | 960 | <960 | 960 | <960 | <900 | - | - | 960 | <960 |
| UL94 (0,75mm) | Klasse | V0 | V2 | V2 | V2 | V2 | V0 | V2 | V0 | V2 |

| | | | | | | | | | | |
|---|---|---|---|---|---|---|---|---|---|---|
| Angaben der Komponenten in Gew.% bezogen auf die Gesamtformmasse | | | | | | | | | | |

Die Beispiele in Tabelle 1 zeigen, dass die erfindungsgemäßen Rezepturen 1, 2 und 3, die neben Komponente A) noch Melamincyanurat als Komponente B) und Komponente C) beschlichtet mit C') enthalten, gegenüber den Vergleichsbeispielen C1 bis C6, also Zusammensetzungen die nicht das erfindungsgemäß einzusetzende nicht-geschäumte, nicht-faserförmige gemahlene Glas enthalten, deutliche Vorteile im Brandverhalten in Form einer V0 Einstufung zeigen.

**Tabelle 2:**

| | | **4** | **C7** | **C8** | **C9** |
|---|---|---|---|---|---|
| A | [%] | 70,2 | 70,2 | 70,2 | 70,2 |
| B | [%] | 4 | 4 | 4 | 4 |
| C | [%] | 25 | | | |
| G2 | [%] | | 25 | | |
| G6 | [%] | | | 25 | |
| G7 | [%] | | | | 25 |
| F | [%] | 0,3 | 0,3 | 0,3 | 0,3 |
| H1 | [%] | 0,5 | 0,5 | 0,5 | 0,5 |
| GWFI (0,75mm) | [°C] | 960 | <960 | <960 | <960 |

| | | | | | |
|---|---|---|---|---|---|
| Angaben der Komponenten in Gew.% bezogen auf die Gesamtformmasse | | | | | |

Die Beispiele in Tabelle 2 zeigen, dass die erfindungsgemäße Rezeptur 4, die neben Komponente A) noch Melamincyanurat als Komponente B) und Komponente C) beschlichtet mit C') enthält, gegenüber den Vergleichsbeispielen C7 bis C9, also Zusammensetzungen die nicht das erfindungsgemäß einzusetzende nicht-geschäumte, nicht-faserförmige gemahlene Glas enthalten, deutliche Vorteile im Brandverhalten in Form einer GWFI-Klassifizierung von 960°C auch bei niedriger Flammschutzmittelkonzentration (Komponente B) zeigt.

## Patentansprüche

1. Zusammensetzungen, enthaltend
A) 5 bis 95 Gew.-%, bevorzugt 20 bis 90 Gew.-%, besonders bevorzugt 30 bis 80 Gew.-% eines thermoplastischen Polyamids,
B) 0,01 bis 40 Gew.-% Melamincyanurat,
C) 5 bis 80 Gew.-%, bevorzugt 10 bis 60 Gew.-%, besonders bevorzugt 15 bis 40 Gew.-% eines nicht-faserförmigen und nicht-geschäumten gemahlenen Glases mit einem d90 von 10 bis 200 µm, bevorzugt 20 bis 150 µm, besonders bevorzugt 35 bis 80 µm.

2. Zusammensetzungen gemäß Anspruch 1, **dadurch gekennzeichnet, dass** die Komponente C) zusätzlich noch mit C'), mindestens einem Aminoalkyltrialkoxysilan, bevorzugt in Mengen von 0,01 Gew.% bis 1,5 Gew.-% bezogen auf die Menge des nicht-faserförmigen und nicht-geschäumten gemahlenen Glases beschlichtet ist.

3. Zusammensetzungen gemäß der Ansprüche 1 oder 2, **dadurch gekennzeichnet, dass** diese zusätzlich noch D) 0,01 bis 60 Gew.-% mindestens eines halogenhaltigen oder mindestens eines unterschiedlich zur Komponente B) halogenfreien Flammschutzmittels enthalten.

4. Zusammensetzungen gemäß der Ansprüche 1 bis 3, **dadurch gekennzeichnet, dass** diese E) 0,01 bis 50 Gew.-% mindestens eines Elastomermodifikators enthalten.

5. Zusammensetzungen gemäß der Ansprüche 1 bis 4, **dadurch gekennzeichnet, dass** diese F) 0,01 bis 5 Gew.-%, mindestens eines Gleit- und/oder Entformungsmittels enthalten.

6. Zusammensetzungen gemäß der Ansprüche 1 bis 5, **dadurch gekennzeichnet, dass** diese G) 0,01 bis 50 Gew.% mindestens eines Füllstoffs verschieden von Komponente C) enthalten.

7. Zusammensetzungen gemäß der Ansprüche 1 bis 6, **dadurch gekennzeichnet, dass** diese H) 0,01 bis 20 Gew.-% wenigstens ein weiteres Additiv enthalten.

8. Zusammensetzungen gemäß der Ansprüche 1 bis 7, **dadurch gekennzeichnet, dass** diese zusätzlich zur Komponente A) Polyamid wenigstens ein weiteres thermoplastisches Polymer enthalten, bevorzugt wenigstens ein anderes Polyamid.

9. Zusammensetzungen gemäß der Ansprüche 1 bis 8, **dadurch gekennzeichnet, dass** das als Komponente C) einzusetzende nicht-faserförmige und nicht-geschäumte gemahlene Glas von partikelförmiger, nicht zylindrischer Gestalt ist und ein Durchmesser zu Dickenverhältnis kleiner 5, bevorzugt kleiner als 3, besonders bevorzugt kleiner 2 aufweist.

10. Zusammensetzungen gemäß der Ansprüche 1 bis 9, **dadurch gekennzeichnet, dass** das als Komponente C) einzusetzende nicht-geschäumte und nicht-faserförmige gemahlene Glas keine Dichte-Verringerung durch etwaige Gaseinschlüsse zeigt.

11. Zusammensetzungen gemäß der Ansprüche 1 bis 10, **dadurch gekennzeichnet, dass** das als Komponente C) einzusetzende nicht-geschäumte und nicht-faserförmige gemahlene Glas nicht die für faserförmiges Glas typische Glasgeometrie mit zylindrischem oder ovalen Querschnitt mit einem Längen- zu Durchmesserverhältnis (L/D-Verhältnis) größer 5 zeigt.

12. Zusammensetzungen gemäß der Ansprüche 1 bis 11, **dadurch gekennzeichnet, dass** die Komponente C) auf Kalk-Natron-Glas oder E-Glas, bevorzugt auf E-Glas basiert.

13. Zusammensetzungen gemäß der Ansprüche 1 bis 11, **dadurch gekennzeichnet, dass** als Komponente C) Glasarten eingesetzt werden, bei denen der Gehalt an K₂O, kleiner oder gleich 2 Gew.-% bezogen auf alle Komponenten des Glases ist.

14. Zusammensetzungen gemäß der Ansprüche 1 bis 13, **dadurch gekennzeichnet, dass** als Komponente A) PA 6 oder PA 66 eingesetzt wird.

15. Zusammensetzungen gemäß der Ansprüche 1 bis 14, **dadurch gekennzeichnet, dass** das nicht-faserförmige und nicht-geschäumte gemahlene Glas weiterhin einen d10 von 0,6 bis 10 µm, aufweist.

16. Zusammensetzungen gemäß Anspruch 15, **dadurch gekennzeichnet, dass** das nicht-faserförmige und nicht-geschäumte gemahlene Glas zudem einen d50 von 3 bis 50 µm aufweist.

17. Erzeugnisse, bevorzugt Fasern, Folien oder Formkörper, erhältlich aus den Zusammensetzungen gemäß der Ansprüche 1 bis 16 durch Spritzguss oder Extrusion.

18. Verwendung der Erzeugnisse gemäß Anspruch 17 in der Kraftfahrzeug-, Elektro-, Elektronik-, Telekommunikations-, Computerindustrie, im Sport, in der Medizin, im Haushalt, in der Bau- oder in der Unterhaltungsindustrie.

## Claims

1. Compositions comprising
A) from 5 to 95% by weight, preferably from 20 to 90% by weight, particularly preferably from 30 to 80% by weight, of a thermoplastic polyamide,
B) from 0.01 to 40% by weight of melamine cyanurate,
C) from 5 to 80% by weight, preferably from 10 to 60% by weight, particularly preferably from 15 to 40% by weight, of a non-fibrous and unfoamed ground glass with d90 from 10 to 200 µm, preferably from 20 to 150 µm, particularly preferably from 35 to 80 µm.

2. Compositions according to Claim 1, **characterized in that** component C) has also been sized with C') at least one aminoalkyltrialkoxysilane, preferably in amounts of from 0.01% by weight to 1.5% by weight, based on the amount of the non-fibrous and unfoamed ground glass.

3. Compositions according to Claim 1 or 2, **characterized in that** these also comprise D) from 0.01 to 60% by weight of at least one halogen-containing flame retardant or of at least one halogen-free flame retardant different from component B).

4. Compositions according to Claims 1 to 3, **characterized in that** these comprise E) from 0.01 to 50% by weight of at least one elastomer modifier.

5. Compositions according to Claims 1 to 4, **characterized in that** these comprise F) from 0.01 to 5% by weight of at least one lubricant and/or mould-release agent.

6. Compositions according to Claims 1 to 5, **characterized in that** these comprise G) from 0.01 to 50% by weight of at least one filler other than component C).

7. Compositions according to Claims 1 to 6, **characterized in that** these comprise H) from 0.01 to 20% by weight of at least one further additive.

8. Compositions according to Claims 1 to 7, **characterized in that** these comprise, in addition to polyamide component A), at least one further thermoplastic polymer, preferably at least one other polyamide.

9. Compositions according to Claims 1 to 8, **characterized in that** the non-fibrous and unfoamed ground glass to be used as component C) is of non-cylindrical particulate shape with diameter : thickness ratio smaller than 5, preferably smaller than 3, particularly preferably smaller than 2.

10. Compositions according to Claims 1 to 9, **characterized in that** the unfoamed and non-fibrous ground glass to be used as component C) exhibits no density reduction due to any possible gas inclusions.

11. Compositions according to Claims 1 to 10, **characterized in that** the unfoamed and non-fibrous ground glass to be used as component C) does not exhibit the geometry which is typical of fibrous glass and which involves a cylindrical or oval cross section with a length : diameter ratio (L/D ratio) greater than 5.

12. Compositions according to Claims 1 to 11, **characterized in that** component C) is based on soda-lime glass or E glass, preferably on E glass.

13. Compositions according to Claims 1 to 11, **characterized in that** component C) uses types of glass in which the content of K₂O, based on all of the components of the glass, is smaller than or equal to 2% by weight.

14. Compositions according to Claims 1 to 13, **characterized in that** component A) uses PA 6 or PA 66.

15. Compositions according to Claims 1 to 14, **characterized in that** the d10 of the non-fibrous and unfoamed ground glass is moreover from 0.6 to 10 µm.

16. Compositions according to Claim 15, **characterized in that** the d50 of the non-fibrous and unfoamed ground glass is moreover from 3 to 50 µm.

17. Products, preferably fibres, foils or mouldings, obtainable from the compositions according to Claims 1 to 16 via injection moulding or extrusion.

18. Use of the products according to Claim 17 in the motor vehicle industry, electrical industry, electronics industry, telecommunications industry, or computer industry, or in sport, in medicine, in households, in the construction industry or in the entertainment industry.

## Revendications

1. Compositions, contenant
A) 5 à 95% en poids, de préférence 20 à 90 % en poids, de façon particulièrement préférée 30 à 80 % en poids d'un polyamide thermoplastique,
B) 0,01 à 40 % en poids de cyanurate de mélamine,
C) 5 à 80 % en poids, de préférence 10 à 60 % en poids, de façon particulièrement préférée 15 à 40 % en poids d'un verre broyé, non sous forme de fibres et non cellulaire, ayant une valeur d90 de 10 à 200 µm, de préférence de 20 à 150 µm, de façon particulièrement préférée de 35 à 80 µm.

2. Compositions selon la revendication 1, **caractérisées en ce que** le composant C) est additionnellement encore enrobé avec C') au moins un aminoalkyltrialcoxysilane, de préférence en des quantités de 0,01 % en poids à 1,5 % en poids, par rapport à la quantité du verre broyé, non sous forme de fibres et non cellulaire.

3. Compositions selon l'une quelconque des revendications 1 et 2, **caractérisées en ce qu'**en outre elles contiennent encore D) 0,01 à 60 % en poids d'au moins un agent ignifuge halogéné ou au moins un agent ignifuge exempt d'halogène, différent du composant B).

4. Compositions selon les revendications 1 à 3, **caractérisées en ce qu'**elles contiennent E) 0,01 à 50 % en poids d'au moins un modificateur élastomère.

5. Compositions selon les revendications 1 à 4, **caractérisées en ce qu'**elles contiennent F) 0, 01 à 5 % en poids d'au moins un lubrifiant et/ou agent de démoulage.

6. Compositions selon les revendications 1 à 5, **caractérisées en ce qu'**elles contiennent G) 0,01 à 50 % en poids d'au moins une charge différente du composant C).

7. Compositions selon les revendications 1 à 6, **caractérisées en ce qu'**elles contiennent H) 0,01 à 20 % en poids d'au moins un autre additif.

8. Compositions selon les revendications 1 à 7, **caractérisées en ce qu'**en plus du composant A) polyamide elles contiennent au moins un autre polymère thermoplastique, de préférence au moins un autre polyamide.

9. Compositions selon les revendications 1 à 8, **caractérisées en ce que** le verre broyé, non sous forme de fibres et non cellulaire, à utiliser en tant que composant C), est de forme particulaire, non cylindrique et présente un rapport de diamètre à épaisseur inférieur à 5, de préférence inférieur à 3, de façon particulièrement préférée inférieur à 2.

10. Compositions selon les revendications 1 à 9, **caractérisées en ce que** le verre broyé, non sous forme de fibres et non cellulaire, à utiliser en tant que composant C), ne présente aucune diminution de densité due à d'éventuelles inclusions de gaz.

11. Compositions selon les revendications 1 à 10, **caractérisées en ce que** le verre broyé, non sous forme de fibres et non cellulaire, à utiliser en tant que composant C), ne présente pas la géométrie caractéristique d'un verre sous forme de fibres, à section transversale cylindrique ou ovale avec un rapport longueur à diamètre (rapport L/D) supérieur à 5.

12. Compositions selon les revendications 1 à 11, **caractérisées en ce que** le composant C) est à base de verre sodocalcique ou de verre E, de préférence de verre E.

13. Compositions selon les revendications 1 à 11, **caractérisées en ce qu'**on utilise comme composant C) des types de verre dans lesquels la teneur en K₂O est inférieure ou égale à 2 % en poids, par rapport à la totalité des composants du verre.

14. Compositions selon les revendications 1 à 13, **caractérisées en ce qu'**on utilise comme composant A) du PA 6 ou du PA 66.

15. Compositions selon les revendications 1 à 14, **caractérisées en ce que** le verre broyé, non sous forme de fibres et non cellulaire, présente en outre une valeur d10 de 0,6 à 10 µm.

16. Compositions selon la revendication 15, **caractérisées en ce que** le verre broyé, non sous forme de fibres et non cellulaire, présente en outre une valeur d50 de 3 à 50 µm.

17. Produits, de préférence fibres, films ou corps moulés, pouvant être obtenus à partir des compositions selon les revendications 1 à 16, par moulage par injection ou extrusion.

18. Utilisation des produits selon la revendication 17, dans l'industrie de l'automobile, de l'équipement électrique, de l'électronique, des télécommunications, l'industrie de l'informatique, dans le sport, en médecine, dans le secteur domestique, dans l'industrie du bâtiment et des travaux publiques ou dans l'industrie des loisirs.
